# EUROPÄISCHE PATENTSCHRIFT

(11) **EP 0 256 280 B1**
(45) Veröffentlichungstag und Bekanntmachung des Hinweises auf die Patenterteilung: **01.02.1995**
(21) Anmeldenummer: 87109675.6
(22) Anmeldetag: 06.07.1987
(51) Int. Cl.: G01K 11/12

(54) **Anordnung zur zeitlich aufgelösten optischen Rückstreumessung an Lichtwellenleitern**
Device for optical time domain reflectometry on optical fibres
Dispositif de réflectométrie optique résolue dans le temps dans des fibres optiques

(30) Priorität: 11.08.1986 DE 3627198
(43) Veröffentlichungstag der Anmeldung: 24.02.1988
(73) Patentinhaber: ABB Management AG, 5401 Baden (CH)
(72) Erfinder: Kirchhofer, Rolf, CH-5507 Mellingen (CH); Schad, Hanspeter, Dr., CH-5415 Rieden (CH)

(56) Entgegenhaltungen:
- EP-A- 0 190 001
- GB-A- 2 140 554
- US-A- 4 123 160
- APPLIED OPTICS, Band 16, Nr. 7, Juli 1977, Seiten 1765-1766; M.A. MAHDAVI: "Compact interference-filter polychromator and narrow band rejection filter"

## Beschreibung

### Technisches Gebiet

Die Erfindung bezieht sich auf die Messung physikalischer Grössen mittels Rückstreuung von Licht. Sie betrifft speziell eine Anordnung zur zeitlich aufgelösten optischen Rückstreumessung (OTDR = Optical Time Domain Reflectrometry) an Lichtwellenleitern, nach dem Oberbegriff des ersten Anspruchs.

### Stand der Technik

Zeitlich aufgelöste optische Rückstreumessung an Lichtwellenleitern, bekannt unter der Abkürzung OTDR (Optical Time Domain Reflectrometry) dienen bereits seit längerer Zeit zur ortsaufgelösten Dämpfungsmessung in den Lichtwellenleitern (siehe z.B. den Artikel von S.D.Personick, "Photon Probe-An Optical-Fiber Time-Domain Reflectometer", Bell Syst.Tech.J.56, 1977, S.355 ff.).

Bei diesem bekannten Verfahren der Rückstreumessung wird das durch Rayleighstreuung zurückgestreute Licht in Form eines Echo-Impulses aufgezeichnet und ausgewertet, um Aussagen über die Ausbreitungsdämpfung in dem Lichtwellenleiter in Abhängigkeit von der Entfernung zu erhalten.

Seit kurzem ist nun auch bekannt (siehe z.B. die GB-A 2 140 554 oder den Artikel von J.P.Dakin et al. in SPIE Vol.566 Fiber Optic and Laser Sensors III (1985), S.249 ff), solche Rückstreumessungen an Lichtwellenleitern so auszuführen, dass sich damit eine ortsaufgelöste Temperaturmessung realisieren lässt.

Hierbei ist es notwendig, den relativ stark temperaturabhängigen Anteil der Ramanstreuung, der neben einem kräftigen Peak der Rayleighstreuung nur schwach in Erscheinung tritt, herauszufiltern (z.B. mit einem Monochromator) und auszuwerten. Einzelheiten des Verfahrens können den oben zitierten Druckschriften entnommen werden.

In schwach dotiertem Quarzglas, aus dem im Allgemeinen Lichtwellenleiter (kurz: LWL) bestehen, ist der Anteil der Ramanstreuung (Streuung an Molekülschwingungen) gegenüber dem Hauptanteil der Rayleighstreuung (Streuung an Dichtefluktuationen) weniger als 1/1000. Die Ramanstreuung umfasst einen bei grösseren Wellenlängen liegenden Stokes-Peak und einen bei kürzeren Wellenlängen liegenden Anti-Stokes-Peak.

Der Stokes-Peak macht zwar nur 1/2000 des Wertes des entsprechenden Rayleigh-Peaks aus, ist aber relativ gut ausgeprägt. Der Anti-Stokes-Peak ist dagegen im Rückstreuspektrum wegen der begrenzten Auflösung des Monochromators nur als schwache Schulter auf der Flanke des Rayleigh-Peaks erkennbar. Bei der ortsaufgelösten Temperaturmessung wird aber gerade der Anteil der Anti-Stokes-Ramanstreuung absolut und genau benötigt, da dessen ausgeprägte Temperaturabhängigkeit die Grundlage des Messverfahrens bildet. Jede Möglichkeit zur unschädlichmachung des störenden Rayleigh-Peaks dient daher der Verbesserung der Signalanalyse.

### Darstellung der Erfindung

Es ist nun die Aufgabe der Erfindung, eine Messanordnung für die optische Rückstreumessung zu schaffen, bei der ein deutlich verbessertes Signal/Rausch-Verhältnis erreicht wird.

Diese Aufgabe wird bei einer Anordnung der eingangs genannten Art durch die Merkmale des ersten Anspruch gelöst.

Kern der Erfindung ist es also, im Rückstreuspektrum vor der Auswertung den sehr hohen Rayleigh-Peak selektiv erst einmal zu schwächen, um dann besser den relativ schwachen Anti-Stokes-Peak durch ein Filter oder einen Monochromator separieren zu können und z.B. in einem Photodetektor detektieren zu können.

Die erste Schwächung des Raleigh-Peaks wird dabei in einer zusätzlichen, den wellenlängenselektiven Messmitteln vorgeschalteten Filtervorrichtung vorgenommen.

Gemäss einem bevorzugten Ausführungsbeispiel umfasst die Filtervorrichtung für die Schwächung des Rayleigh-Peaks einen polarisierenden Strahlteiler, durch den das rückgestreute Licht geschickt wird, und hinter dem in Durchgangsrichtung nacheinander eine Viertelwellenplatte und ein Interferenzfilter angeordnet sind, welche beide auf die Wellenlänge des von der Lichtquelle abgestrahlten Lichts abgestimmt sind. Am Ausgang der Filtervorrichtung wird dann diejenige Strahlung entnommen, welche von dem Interferenzfilter reflektiert und von dem polarisierenden Strahlteiler zur Seite herausgespiegelt wird.

Besonders einfach wird der Aufbau der Anordnung, wenn die Mittel zur Ein- und Auskopplung des Lichts in den LWL einen gemeinsamen polarisierenden Strahlteiler umfassen, der in Durchgangsrichtung zwischen der Lichtquelle und dem LWL angeordnet ist, und wenn eine erste Fokussieroptik zwischen dem gemeinsamen polarisierenden Strahlteiler und dem LWL vorgesehen ist.

In diesem Fall können dann der gemeinsame polarisierende Strahlteiler der Ein- und Auskopplungsmittel und der polarisierende Strahlteiler der Filtervorrichtung zu einem gemeinsamen dritten polarisierenden Strahlteiler zusammengefasst werden. An dem dritten polarisierenden Strahlteiler ist dann auf der Seite des austretenden Rückstreulichts ein Umlenkprisma angeordnet, welches das aus dem Strahlteiler austretende Rückstreulicht in den Strahlteiler zurücklenkt. Schliesslich sind auf der dem Umlenkprisma gegenüberliegenden Seite des dritten polarisierenden Strahlteilers die Viertelwellenplatte und das Interferenzfilter der Filtervorrichtung angeordnet.

Weitere Ausführungsbeispiele der Erfindung ergeben sich aus den Unteransprüchen.

### Kurze Beschreibung der Zeichnungen

Nachfolgend soll nun die Erfindung anhand von Ausführungsbeispielen im Zusammenhang mit der Zeichnung beschrieben und näher erläutert werden. Es zeigen
- Fig.1: eine an sich bekannte Anordnung für die OTDR-Messung;
- Fig.2: den nach der Erfindung geänderten Aufbau der Anordnung nach Fig.1 mit der zusätzlichen Filtervorrichtung (ausschnittweise);
- Fig.3: ein Ausführungsbeispiel für den inneren Aufbau einer Filtervorrichtung nach Fig.2;
- Fig.4A: das Durchlassverhalten eines Interferenzfilters aus der Filtervorrichtung nach Fig.3;
- Fig.4B: das Durchlassverhalten der gesamten Filtervorrichtung nach Fig.3;
- Fig.5: das bevorzugte Ausführungsbeispiel für eine OTDR-Anordnung nach der Erfindung mit nur einem, mehrere Funktionen erfüllenden, polarisierenden Strahlteiler;
- Fig.6A: das Rückstreuspektrum einer OTDR-Anordnung ohne die erfindungsgemässe Filtervorrichtung; und
- Fig.6B: das entsprechende Rückstreuspektrum bei Verwendung der erfindungsgemässen Filtervorrichtung.

### Wege zur Ausführung der Erfindung

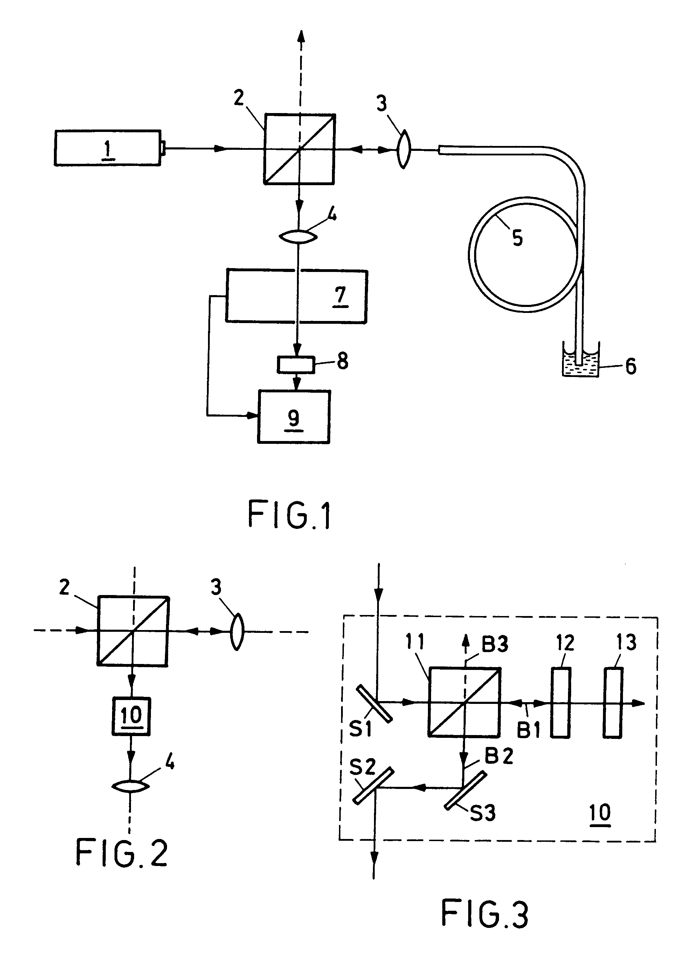

In der Fig.1 ist ein einfacher, an sich bekannter Aufbau zur Messung der kontinuierlichen Rückstreuung in einem LWL wiedergegeben. Für die Messung wird Licht aus einer Lichtquelle 1 verwendet, die z.B. ein HeNe-Laser (mit einer Leistung von 12mW) oder eine Halbleiterlaser-Diode sein kann.

Das Licht aus der Lichtquelle 1 wird durch einen polarisierenden Strahlteiler 2 geschickt, der zur Unterdrückung des störenden Fresnel-Reflexes (auf weniger als 10% des Rayleigh-Peaks) auf der Einkoppelseite des LWL dient.

Nach Durchlaufen des polarisierenden Strahlteilers 2 wird das Licht über eine erste Fokussieroptik 3 in einen Lichtwellenleiter 5 eingekoppelt, der als örtlich verteilter Temperatursensor dient und an seinem anderen Ende mit einer Indexanpassung 6 versehen ist. Diese Indexanpassung 6,z.B. ein Behälter mit Oel eines entsprechenden Brechungsindexes, dient zur Unterdrückung des Fresnel-Reflexes an diesem LWL-Ende.

Das auf der gesamten Länge des LWL reflektierte Licht gelangt über die erste Fokussieroptik 3 zurück auf den polarisierenden Strahlteiler 2, wird dort seitlich herausreflektiert und fällt über eine zweite Fokussieroptik 4, durch einen Monochromator 7 spektral abgetastet und zerlegt, auf einen Photodetektor 8, z.B. eine PIN-Photodiode, eine Avalanche-Photodiode oder einen Photomultiplier.

Für die im Monochromator 7 ausgeblendeten Ramanfrequenzen wird der durch die impulsartig arbeitende Lichtquelle 1 erzeugte Rückstreuimpuls in einer Auswerteeinrichtung 9 aufgezeichnet und ausgewertet.

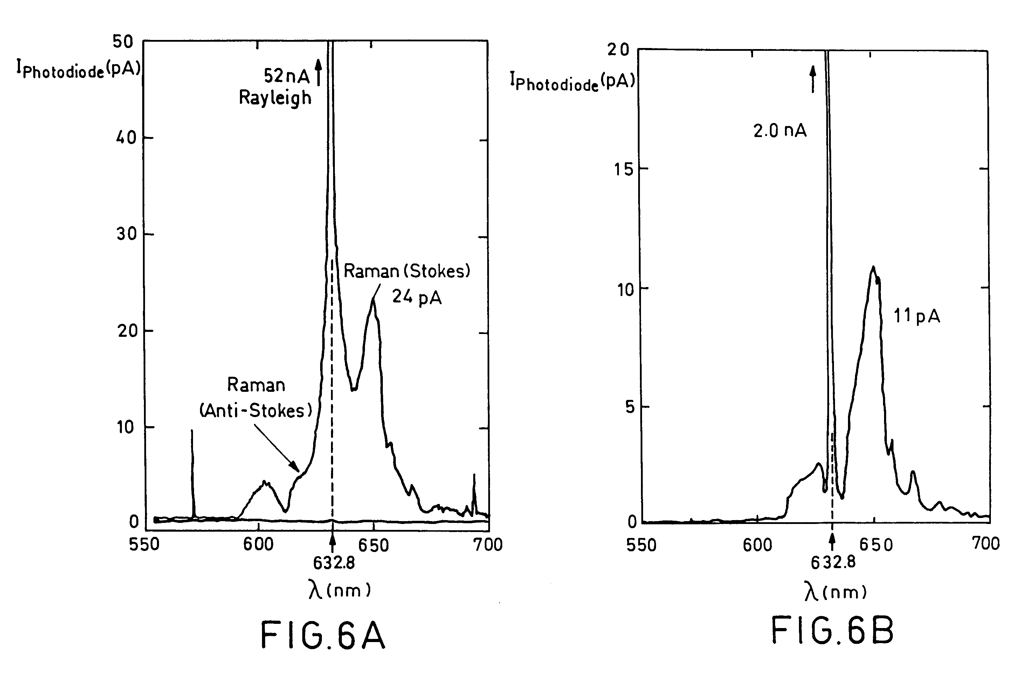

Ein Rückstreuspektrum, wie es mit dem Monochromator 7 in einer Messanordnung nach Fig.1 abgetastet werden kann, ist in Fig.6A im Wellenlängenbereich von 550 nm bis 700 nm dargestellt. Als Mass für die Stärke der Rückstreustrahlung ist dort der Strom einer als Photodetektor 8 eingesetzten Photodiode in der Einheit Pico-Ampere aufgetragen.

Man erkennt in der Fig.6A sofort, dass der für die Temperaturmessung nicht geeignete und deshalb störende Rayleigh-Peak im Rückstreuspektrum mit einem Photodioden-Strom von 52 nA alle anderen Peaks, nämlich die zur Temperaturmessung benötigten Raman-Stokes- und Raman-Anti- Stokes-Peaks, in ihrer Intensität um mehrere Grössenordnungen übertrifft.

Gerade der besonders temperatur-sensible Anti-Stokes-Peak taucht im überragenden Rayleigh-Peak nur als schwach erkennbare Schulter auf. Für eine genaue und reproduzierbare Temperaturmessung mit dem LWL ist es daher wichtig, die Raman-Peaks gegenüber dem Rayleigh-Peak vor der Auswertung möglichst messtechnisch hervorzuheben und abzusetzen.

Dies gelingt nun nach der Erfindung gemäss Fig.2 mit einer zusätzlichen Filtervorrichtung 10, die in einer Anordnung nach Fig.1 zwischen den polarisierenden Strahlteiler 2 und die zweite Fokussieroptik 4 eingeschoben wird und so ausgelegt ist, dass im wesentlichen nur der Rayleigh-Peak im Rückstreuspektrum geschwächt wird.

Gemäss einem bevorzugten Ausführungsbeispiel der Erfindung hat die Filtervorrichtung 10 einen inneren Aufbau, wie er in Fig.3 dargestellt ist. Kernstücke der Filtervorrichtung 10 sind ein polarisierender Strahlteiler 11, eine Viertelwellenplatte (λ/4-Plättchen) 12 und ein Interferenzfilter 13, die beide in Durchgangsrichtung hinter dem polarisierenden Strahlteiler 11 angeordnet sind.

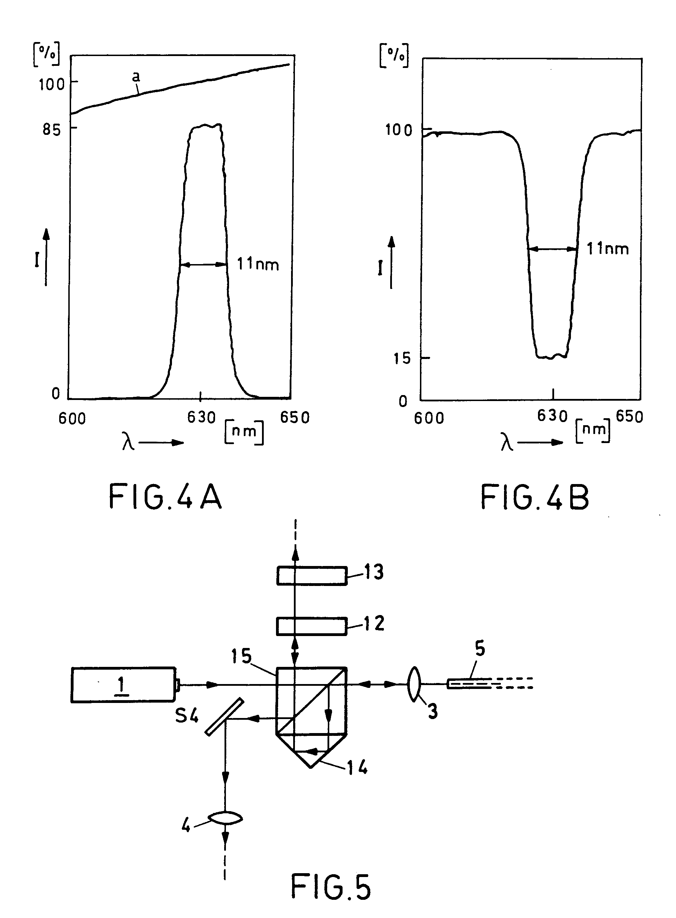

Die Funktion der Filtervorrichtung 10 aus Fig.3 kann anhand der Messkurven aus Fig.4A und B erläutert werden: Kollimiertes Licht von einer Halogenlampe, also ein kontinuierliches Spektrum, das von oben über einen ersten Umlenkspiegel 1 einfällt, wird durch den polarisierenden Strahlteiler 11 in zwei zueinander senkrecht polarisierte Anteile (Strahl B1 und Strahl B3) zerlegt. Strahl B1 wird nach Durchlauf der Viertelwellenplatte 12 an dem (schmalbandigen) Interferenzfilter 13 reflektiert und zugleich transmittiert (z.B. zu 85%).

Hat das einfallende Licht im Durchlassbereich des Interferenzfilters 13 eine kontinuierliche spektrale Verteilung (Kurve a in Fig.4A), und ist die Viertelwellenplatte 12 auf das Interferenzfilter 13 abgestimmt, ergibt sich beispielsweise eine Transmissionskurve des Strahls B1, wie sie in Fig.4A als Kurve b dargestellt ist. Im gewählten Beispiel ist die Anordnung auf eine Wellenlänge von etwa 633 nm abgestimmt und hat eine Halbwertsbreite von etwa 11 nm.

Das am Interferenzfilter 13 reflektierte Licht hat nun eine zu Kurve b aus Fig.4A annähernd inverse Intensitätsverteilung (Fig.4B). Der reflektierte Strahl B2 tritt am polarisierenden Strahlteiler 11 seitlich aus, weil das linear polarisierte Licht nach einem doppelten Durchlauf der Viertelwellenplatte in seiner Polarisationsrichtung um 90° gedreht wird. Für den Fall, dass das einfallende Licht selbst schon entsprechend linear polarisiert ist, entfällt sogar der Strahl B3 (in Fig.3 gestrichelt angedeutet).

Der reflektierte Strahl B2 kann nun über geeignete Umlenkspiegel S2, S3 aus der Filtervorrichtung 10 ausgekoppelt werden. Die Umlenkspiegel S1...S3 dienen im Uebrigen lediglich dazu, die Filtervorrichtung 10 so zu gestalten, dass sie direkt in einen Strahlengang eingefügt werden kann. Für die Filterfunktion wesentlich ist dagegen das Zusammenwirken von Strahlteiler 11, Viertelwellenplatte 10 und Interferenzfilter 13.

Wie aus der Kurve in Fig.4B deutlich abgelesen werden kann, hat die Filtervorrichtung 10 nach Fig.3 die Eigenschaften eines "band-reject"-Filters, welches bis auf einen schmalbandigen Bereich alle Wellenlängen weitgehend ungeschwächt durchlässt. Wird nun die mittlere Wellenlänge dieses schmalbandigen Dämpfungsbereich (in Fig.4B etwa 633 nm) auf die mittlere Wellenlänge des Rayleigh-Peaks, d.h. auf die Wellenlänge der monochromatischen Lichtquelle 1, abgestimmt, kann der Rayleigh-Peak gegenüber den Raman-Peaks entscheidend geschwächt und so das Messverfahren verbessert werden. Wird als Lichtquelle 1 z.B. ein HeNe-Laser eingesetzt, erfolgt die Abstimmung auf eine Wellenlänge von 632,8 nm.

Durch Verwendung der Filtervorrichtung 10 erhält man anstelle des Rückstreuspektrums aus Fig.6A ein Rückstreuspektrum gemäss Fig.6B, bei dem durch die Schwächung des Rayleigh-Peaks nun der linke Raman-Anti-Stokes-Peak deutlich von dem Rayleigh-Peak abgehoben ist.

Man erkennt, dass man mit einer derartigen Filtervorrichtung mit einem noch nicht einmal speziell optimierten Interferenzfilter 13 einen Rayleigh-Peak mit einer Halbwertsbreite von etwa 10 nm auf 15% reduzieren kann. Eine weitere Verbesserung lässt sich erzielen, wenn ein Interferenzfilter 13 mit einer Transmissivität von mehr als 95% eingesetzt wird.

Besonders einfach lässt sich eine OTDR-Messanordnung mit zusätzlicher Filtervorichtung aufbauen, wenn für den polarisierenden Strahlteiler für das Ein- und Auskoppeln (2 in Fig.1,2) und den polarisierenden Strahlteiler der Filtervorrichtung (11 in Fig.3) nur ein einziger Strahlteiler verwendet wird, wenn also die Mittel zum Ein- und Auskoppeln des Lichts in den LWL mit der Filtervorrichtung zu einer Einheit zusammengefasst werden.

Ein solcher bevorzugter Aufbau ist in Fig.5 wiedergegeben. Die Strahlteiler 2 und 11 sind hier zu einem dritten Strahlteiler 15 zusammengefasst. Das seitlich aus dem Strahlteiler 15 herausreflektierte Rückstreulicht wird über ein Umlenkprisma 14 in den Strahlteiler 15 zurückgelenkt und passiert die auf der gegenüberliegenden Seite angeordnete Hintereinanderschaltung von Viertelwellenplatte 12 und Interferenzfilter 13. Das am Interferenzfilter 13 reflektierte Licht fällt zurück in den Strahlteiler, wird dort zur Eintrittsseite hin herausreflektiert und gelangt über einen Umlenkspiegel S4 und die zweite Fokussieroptik 4 wieder in den Monochromator. LWL-Anordnung und Auswerteeinrichtung sind hier dieselben wie in Fig.1.

Insgesamt steht also mit der Erfindung eine Anordnung zur ortsaufgelösten Temperaturmessung mittels OTDR zur Verfügung, die ein deutlich verbessertes Signal/Rausch-Verhältnis aufweist.

## Patentansprüche

1. Anordnung zur zeitlich aufgelösten optischen Rückstreumessung (OTDR = Optical Time Domain Reflectrometry) an Lichtwellenleitern, insbesondere zur ortsaufgelosten Temperaturmessung, umfassend
(a) eine Lichtquelle (1), welche Licht in einer bestimmten Wellenlänge abstrahlt;
(b) einen Lichtwellenleiter (5);
(c) erste Mittel zum Einkoppeln des Lichts aus der Lichtquelle (1) in den Lichtwellenleiter (5);
(d) zweite Mittel zum Auskoppeln des rückgestreuten Lichts, welches aus einer Rayleighstreuung und einer Ramanstreuung stammende Anteile enthält, aus dem Lichtwellenleiter (5); und
(e) dritte Mittel zur wellenlängenselektiven Messung des aus dem Lichtwellenleiter (5) ausgekoppelten, rückgestreuten Ramananteils, welche Mittel im wesentlichen einen Monochromator (7) und einen Photodetektor (8) umfassen, wobei bei der Messung im wesentlichen nur der rückgestreute Ramananteil detektiert wird;
dadurch gekennzeichnet, dass
(f) zwischen den zweiten und dritten Mitteln eine zusätzliche Filtervorrichtung (10) angeordnet ist, welche auf die Wellenlänge des von der Lichtquelle (1) abgestrahlten Lichts abgestimmt ist und den aus der Rayleighstreuung stammenden Anteil des rückgestreuten Lichts vor der wellenlängenselektiven Messung selektiv schwächt.

2. Anordnung nach Anspruch 1, dadurch gekennzeichnet, dass die Filtervorrichtung (10) einen polarisierenden Strahlteiler (11) umfasst, hinter welchem in Durchgangsrichtung nacheinander eine Viertelwellenplatte (12) und ein Interferenzfilter (13) angeordnet sind, welche beide auf die Wellenlänge des von der Lichtquelle (1) abgestrahlten Lichts abgestimmt sind, und dass am Ausgang der Filtervorrichtung (10) diejenige Strahlung abnehmbar ist, welche von dem Interferenzfilter (13) reflektiert und von dem polarisierenden Strahlteiler (11) zur Seite herausgespiegelt wird.

3. Anordnung nach Anspruch 2, dadurch gekennzeichnet, dass das Interferenzfilter (13) eine Transmissivität von wenigstens 85%, vorzugsweise von mehr als 95%, aufweist.

4. Anordnung nach Anspruch 2, dadurch gekennzeichnet, dass die Halbwertsbreite der Durchlasskurve des Interferenzfilters (13) im Bereich von 10 nm liegt.

5. Anordnung nach Anspruch 2, dadurch gekennzeichnet, dass die ersten und zweiten Mittel einen gemeinsamen polarisierenden Strahlteiler (2) umfassen, der in Durchgangsrichtung zwischen der Lichtquelle (1) und dem Lichtwellenleiter (5) angeordnet ist, sowie eine erste Fokussieroptik (3) zwischen dem gemeinsamen polarisierenden Strahlteiler (2) und dem Lichtwellenleiter (5).

6. Anordnung nach Anspruch 5, dadurch gekennzeichnet, dass
(a) der gemeinsame polarisierende Strahlteiler (2) der ersten und zweiten Mittel und der polarisierende Strahlteiler (11) zu einem dritten polarisierenden Strahlteiler (15) zusammengefasst sind;
(b) am dritten polarisierenden Strahlteiler (15) auf der Seite des austretenden Rückstreulichts ein Umlenkprisma (14) angeordnet ist, welches das aus dem Strahlteiler (15) austretende Rückstreulicht in den Strahlteiler (15) zurücklenkt, und
(c) auf der dem Umlenkprisma (14) gegenüberliegenden Seite des dritten polarisierenden Strahlteilers (15) die Viertelwellenplatte (12) und das Interferenzfilter (13) der Filtervorrichtung (10) angeordnet sind.

7. Anordnung nach Anspruch 1, dadurch gekennzeichnet, dass die Lichtquelle (1) ein HeNe-Laser ist.

8. Anordnung nach Anspruch 1, dadurch gekennzeichnet, dass die dritten Mittel die Hintereinanderschaltung einer zweiten Fokussieroptik (4), des Monochromators (7), des Photodetektors (8) und einer Auswerteeinrichtung (9) umfassen.

9. Anordnung nach Anspruch 1, dadurch gekennzeichnet, dass die Lichtquelle (1) eine Halbleiterlaser-Diode ist.

## Claims

1. Arrangement for time-resolved optical backscatter measurement (OTDR = Optical Time Domain Reflectrometry) on optical waveguides, especially for spatially resolved temperature measurement, comprising
(a) a light source (1) which emits light at a specific wavelength;
(b) an optical waveguide (5);
(c) first means for coupling the light out of the light source (1) into the optical waveguide (5);
(d) second means for coupling the backscattered light, which contains components coming from a Rayleigh scattering and a Raman scattering, out of the optical waveguide (5); and
(e) third means for the wavelength-selective measurement of the backscattered Raman component coupled out of the optical waveguide (5), which means essentially comprise a monochromator (7) and a photodetector (8), essentially only the backscattered Raman component being detected in the measurement;
characterized in that
(f) an additional filtering device (10) is arranged between the second and third means, is matched to the wavelength of the light emitted by the light source (1) and selectively attenuates the component of the backscattered light coming from the Rayleigh scattering before the wavelength-selective measurement.

2. Arrangement according to Claim 1, characterized in that the filtering device (10) comprises a polarizing beam-splitter (11) behind which a quarter-wave plate (12) and an interference filter (13) are arranged successively in the direction of passage, both of which are matched to the wavelength of the light emitted by the light source (1), and in that, at the output of the filtering device (10), that radiation which is reflected by the interference filter (13) and reflected out to the side by the polarizing beam-splitter (11) can be picked off.

3. Arrangement according to Claim 2, characterized in that the interference filter (13) has a transmittance of at least 85%, preferably of more than 95%.

4. Arrangement according to Claim 2, characterized in that the half-value width of the transmission curve of the interference filter (13) is in the region of 10 nm.

5. Arrangement according to Claim 2, characterized in that the first and second means comprise a common polarizing beam-splitter (2) which is arranged between the light source (1) and the optical waveguide (5) in the direction of passage, and a first focusing optics unit (3) between the common polarizing beam-splitter (2) and the optical waveguide (5).

6. Arrangement according to Claim 5, characterized in that
(a) the common polarizing beam-splitter (2) of the first and second means and the polarizing beam-splitter (11) are joined together to form a third polarizing beam-splitter (15);
(b) a deflection prism (14), which deflects the backscattered light emerging from the beam-splitter (15) back into the beam-splitter (15), is arranged on the third polarizing beam-splitter (15) on the side of the emerging backscattered light; and
(c) the quarter-wave plate (12) and the interference filter (13) of the filtering device (10) are arranged on the side of the third polarizing beam-splitter (15) opposite the deflection prism (14).

7. Arrangement according to Claim 1, characterized in that the light source (1) is an HeNe laser.

8. Arrangement according to Claim 1, characterized in that the third means comprise the connection in series of a second focusing optics unit (4), the monochromator (7), the photodetector (8) and an evaluation device (9).

9. Arrangement according to Claim 1, characterized in that the light source (1) is a semiconductor laser diode.

## Revendications

1. Agencement pour la mesure de la rétrodiffusion optique dans le temps (OTDR = Optical Time Domain Reflectrometry) sur des guides d'ondes de lumière, en particulier pour la mesure de la température localement résolue, comprenant :
(a) une source de lumière (1), qui émet de la lumière d'une longueur d'onde déterminée;
(b) un guide d'ondes de lumière (5);
(c) des premiers moyens pour faire injecter la lumière de la source de lumière (1) dans le guide d'ondes de lumière (5);
(d) des deuxièmes moyens pour faire sortir du guide d'ondes de lumière (5) la lumière rétrodiffusée, qui contient des composantes provenant d'une diffusion Rayleigh et d'une diffusion Raman, et
(e) des troisièmes moyens pour la mesure sélective en longueur d'onde de la composante Raman rétrodiffusée, sortie du guide d'ondes de lumière (5), ces moyens comprenant en substance un monochromateur (7) et un photodétecteur (8), en substance seule la composante Raman rétrodiffusée étant détectée lors de la mesure;
caractérisé en ce que :
(f) entre les deuxièmes et troisièmes moyens, est disposé un dispositif de filtrage (10) qui est réglé sur la longueur d'onde de la lumière émise par la source de lumière (1) et qui affaiblit sélectivement la composante provenant de la diffusion Rayleigh de la lumière rétrodiffusée, avant la mesure sélective en longueur d'onde.

2. Agencement suivant la revendication 1, caractérisé en ce que le dispositif de filtrage (10) comprend un diviseur de rayon polarisant (11), derrière lequel sont agencés, dans le sens du passage, l'un derrière l'autre, une lame quart-d'onde (12) et un filtre interférentiel (13), qui sont réglés tous deux sur la longueur d'onde de la lumière émise par la source de lumière (1) et en ce qu'à la sortie du dispositif de filtrage (10), le rayonnement qui peut être collecté est celui réfléchi par le filtre interférentiel (13) et rejeté latéralement par réflexion spéculaire par le diviseur de rayon polarisant (11).

3. Agencement suivant la revendication 2, caractérisé en ce que le filtre interférentiel (13) présente une transmissivité d'au moins 85% et de préférence de plus de 95%.

4. Agencement suivant la revendication 2, caractérisé en ce que la largeur de la valeur moyenne de la courbe de transmission du filtre interférentiel (13) se situe dans le domaine de 10 nm.

5. Agencement suivant la revendication 2, caractérisé en ce que les premiers et deuxièmes moyens comprennent un diviseur de rayon polarisant (2) commun, qui est agencé, dans le sens du passage, entre la source de lumière (1) et le guide d'ondes de lumière (5), de même qu'une première optique de focalisation (3) entre le diviseur de rayon polarisant (2) commun et le guide d'ondes de lumière (5).

6. Agencement suivant la revendication 5, caractérisé en ce que :
(a) le diviseur de rayon polarisant (2) commun des premiers et deuxièmes moyens et le diviseur de rayon polarisant (11) sont réunis en un troisième diviseur de rayon polarisant (15);
(b) sur le troisième diviseur de rayon polarisant (15) est disposé, du côté de la lumière rétrodiffusée sortante, un prisme de renvoi (14) qui renvoie dans le diviseur de rayon (15) la lumière rétrodiffusée sortant du diviseur de rayon (15), et
(c) la lame quart-d'onde (12) ainsi que le filtre interférentiel (13) du dispositif de filtrage (10) sont agencés du côté du troisième diviseur de rayon polarisant (15) qui est opposé au prisme de renvoi (14).

7. Agencement suivant la revendication 1, caractérisé en ce que la source de lumière (1) est un laser au HeNe.

8. Agencement suivant la revendication 1, caractérisé en ce que les troisièmes moyens comprennent le montage, l'un derrière l'autre, d'une deuxième optique de polarisation (4), du monochromateur (7), du photodéctecteur (8) et d'un dispositif d'évaluation (9).

9. Agencement suivant la revendication 1, caractérisé en ce que la source de lumière (1) est une diode laser à semi-conducteur.
